## Europäisches Patentamt

## European Patent Office

## Office européen des brevets

(11) Veröffentlichungsnummer: **0 082 548**
A1

(12) **EUROPÄISCHE PATENTANMELDUNG**

(21) Anmeldenummer: 82201555.8

(22) Anmeldetag: 08.12.82

(51) Int. Cl.³: **D 01 H 1/244**

(30) Priorität: 22.12.81 CH 8195/81

(43) Veröffentlichungstag der Anmeldung:
29.06.83 Patentblatt 83/26

(84) Benannte Vertragsstaaten:
CH DE FR GB IT LI

(71) Anmelder: BBC Aktiengesellschaft Brown, Boveri & Cie.
Haselstrasse
CH-5401 Baden(CH)

(72) Erfinder: Gubler, Hans-Rudolf
Riedwiesstrasse 18
CH-5412 Gebenstorf(CH)

(54) Antrieb und Lagerung eines Offen-End-Spinnaggregates.

(57) Um die von der Textilindustrie geforderten sehr hohen Drehzahlen bei Offen-End-Spinnvorrichtungen zum Zwecke der Produktionssteigerung bei der Garnherstellung erreichen zu können, werden die Rotoren (2, 3, 4) die mit dem Spinntopf (5) einschliesslich Spinnrille (5') einstückig oder fest verbunden sind, als Hohlwelle (2) ausgebildet und diese wird auf einem Lagerzapfen (9), der im Inneren der Hohlwelle (2) angeordnet ist, mittels gasdynamischer Radialgleitlager (10, 11), die als Innenlager ausgebildet sind, radial geführt. Zur axialen Führung des sehr schnell rotierenden Rotors (2, 3, 4, 5) sind gasdynamische Axialgleitlager (19, 23; 20, 24) vorgesehen. Der Rotor (2, 3, 4) mitsamt Spinntopf (5) ist auf einfache Weise von der Spinnseite her ein- und ausschiebbar und zu dessen Positionierung über den gesamten Drehzahl- bereich sind Permanentmagneten (13, 16) im Lagerzapfen (9) gegenüber der Spinntopfhinterseite (21') und in einer rin- gförmigen Erweiterung (15) des Lagerzapfens (9) ange- ordnet.

./...

Croydon Printing Company Ltd.

98/81
KT/eh

- 1 -

## Antrieb und Lagerung eines
## Offen-End-Spinnaggregates

Die Erfindung bezieht sich auf eine Offen-End-Spinnvorrichtung, im wesentlichen bestehend aus einem Elektromotor mit Gehäuse und Statorblechpaket, einem Rotor, dessen Blechpaket und Wicklung auf einer Hohlwelle angeordnet sind und einem auf der Hohlwelle angeordnetem Spinntopf. Eine derartige Vorrichtung ist z.B. aus der CH-PS 598 503 bekannt.

Die Anforderungen, welche an die im Offen-End-Spinnverfahren arbeitenden Textilmaschinen gestellt werden, sind im wesentlichen folgende:

- Hohe Produktionsleistung pro Maschineneinheit

- Lange Lebensdauer

- Kurze Stillstandszeiten

- Grosse Revisionsintervalle

- Geringer Schallpegel

- Grosse Flexibilität für einen breiten Garnnummernbereich

Diesen Forderungen kann aber nur mit Maschinenkonstruktionen nachgekommen werden, die im wesentlichen ein störungsfreies Spinnen mit sehr hohen Drehzahlen und eine rasche Austauschbarkeit der Spinntöpfe mit unterschiedlichen Abmessungen bei minimalen Betriebsstillstandszeiten ermöglichen. Die notwendige Robustheit der konstruktiven Ausführungen und die notwendige Laufruhe der Rotoren bei hohen Drehzahlen, welche die Lagerung der Rotoren betreffen, sind hierfür eine wichtige Voraussetzung.

In der CH-PS 598 503 wird ein Spinnaggregat der oben erwähnten Gattung beschrieben. Hierbei bildet die Rotorwelle mit dem Läufer des Elektromotors gemeinsam mit Wälzlagern eine Baueinheit, die eine feste Aufnahme im Gehäuseteil der Maschine mittels Einklebens und gegebenenfalls durch zusätzliche mechanische Verankerung durch Nut und Feder findet.

Die Verwendung von Wälzlagern für hohe Rotordrehzahlen ist jedoch problematisch, da diese zu Reibungsverlusten führen können, die sich in Wärme umsetzen und diese auf den Rotor und den Spinntopf übertragen. Die konstruktive Ausbildung gemäss CH-PS 598 503 sieht zwar die Auswechselbarkeit des Läuferteiles im Textilbetrieb vor, jedoch ist deren Realisierbarkeit dort nicht beschrieben. Sie dürfte jedoch arbeits- und zeitaufwendig sein.

Ausgehend vom vorstehend geschilderten Stand der Technik liegt der Erfindung die Aufgabe zugrunde, eine Offen-End-Spinnvorrichtung zu schaffen, die in einem sehr hohen Drehzahlbereich betriebssicher arbeitet, und der Rotor mitsamt Spinntopf auf einfache Weise ausgewechselt und/oder verschiedene Spinntopfgrössen beliebig untereinander ausgetauscht werden können. Zur Lösung dieser Aufgabe ist ergabe ist erfindungsgemäss vorgesehen, dass im Inneren der Hohlwelle ein Lagerzapfen angeordnet ist, der den Rotor mitsamt Wicklung und Spinntopf zumindest in radialer Richtung führt, welcher Lagerzapfen mit dem Gehäuse des Motors fest verbunden ist. Diese konstruktive Ausbildung weist folgende Vorteile auf:

- Der Drehimpuls wird elektromagnetisch ohne nennenswerte Verluste auf die rotierende Masse des Rotors übertragen. Durch die geringe Reibung der Lagerung resultiert selbst bei hohen Drehzahlen eine verminderte Leistungsaufnahme des Elektromotors;

- Dieser obengenannte Vorteil wird noch dadurch verstärkt, dass die Lagerung des Rotors an den wellendynamisch bevorzugten und anwendungsspezifisch zweckmässigsten Stellen vorgesehen werden kann;

- Durch Verlegung der Rotorlagerung von der Wellenaussenseite auf die Welleninnenseite ist der Rotor vom Lager thermisch entkoppelt. Insbesondere werden dadurch Rückwirkungen des sich infolge elektromagnetischer Einflüsse und Reibungskräfte erwärmenden Rotors eliminiert.

- Der statische Teil der Rotorlagerung ist schwingungsmässig derart ausgebildet, dass der Rotor in einem sehr hohen Drehzahlbereich stabil geführt ist.

Gemäss Anspruch 2 sind die Hohlwelle und der Spinntopf einstückig ausgebildet oder fest miteinander verbunden. Dadurch wird eine hohe dynamische Steifigkeit des Rotors mitsamt Spinntopf erreicht.

Nach Anspruch 3 ist der Rotor mit Spinntopf in die Statorbohrung von der Spinnseite her ein- und ausschiebbar. Der Vorteil dieser Ausführungsform ist darin zu sehen, dass mittels dieser Anordnung von Rotor- und Statorteil der Rotor auf einfache Weise ohne Lösen mechanischer Verbindungen auswechselbar ist und/oder verschiedene Spinntopfgrössen beliebig untereinander austauschbar sind.

Entsprechend Anspruch 4 reicht der Lagerzapfen bis an das spinntopfseitige Ende der Hohlwelle heran.

Nach Anspruch 5 ist am spinntopfseitigen Abschnitt der Hohlwelle ein erstes gasdynamisches Radiallager und am entgegengesetzten Ende der Hohlwelle ein zweites gasdynamisches Radiallager vorgesehen.

Der Vorteil gemäss Anspruch 4 und 5 besteht darin, dass der Rotor mitsamt Spinntopf bei sehr hohen Drehzahlen radial stabil geführt ist.

Nach Anspruch 6 ist das Gehäuse mit einer Frontabdeckung versehen, die als Lagerschild für ein gasdynamisches Axiallager ausgebildet ist.

Entsprechend Anspruch 7 ist der Lagerzapfen mit wenigstens einer ringförmigen Erweiterung versehen, die zur Aufnahme eines weiteren gasdynamischen Axiallagers dient.

Der Vorteil gemäss den Ansprüchen 6 und 7 ist darin zu sehen, dass der Rotor mitsamt Spinntopf bei sehr hohen Drehzahlen axial stabil geführt ist.

Gemäss Anspruch 8 sind im Statorteil Mittel zur Erzeugung einer Rückstellkraft für den Rotor vorgesehen.

Nach Anspruch 9 sind die Mittel Permanentmagnete, welche eine ringförmige Ausbildung aufweisen.

Nach Anspruch 10 ist in dem der Spinntopfhinterseite gegenüberliegenden Ende des Lagerzapfens wenigstens ein Permanentmagnet vorgesehen.

Entsprechend Anspruch 11 ist in der ringförmigen Erweiterung
des Lagerzapfens wenigstens ein Permanentmagnet vorgesehen.

Der Vorteil gemäss Anspruch 8 bis 11 besteht darin, dass
der Rotor mitsamt Spinntopf in jedem Drehzahlbereich genau
positioniert ist.

Nach Anspruch 12 wird in den Spalten zwischen den radialen
und axialen Funktionsflächen der Lager und den Funktionsflächen des Lagerzapfens sowie der Spinntopfhinterseite
ein Luftüberdruck erzeugt und der Rotor ist gasdynamisch
kontaktlos geführt.

Mit der konstruktiven Massnahme gemäss Anspruch 12 ist
eine unzulässige Rotorerwärmung im Dauerbetrieb bei sehr
hohen Drehzahlen des Antriebs- und Arbeitsaggregates ausgeschlossen und es wird eine hohe Laufruhe des Rotors bei
grossen Drehzahlen erreicht. Mit dieser dynamischen Radial-
und Axiallageraufhängung des Rotors gemäss Anspruch 12
wird die geringfügig unwuchtig rotierende Masse des Rotors
bei sehr hohen Drehzahlen stabil geführt.

Gemäss Anspruch 13 weisen die gegenüberliegenden Flächen
von Spinntopfhinterseite und Stirnfläche des Lagerschildes
ähnliche Konturen zur Abdichtung des Rotors auf.

Entsprechend Anspruch 14 reicht das Lagerschild bis an
die Hohlwelle heran, wobei die verbleibende Bohrung des
Lagerschildes einen dem Aussendurchmesser des Rotors entsprechenden Durchmesser aufweist.

Mit diesen konstruktiv abdichtenden Massnahmen gemäss Anspruch 13 und 14 wird der Rotor gegenüber der Umgebungsluft abgeschirmt. Dadurch werden die durch den Rotor verursachten Luftreibungsverluste stark reduziert.

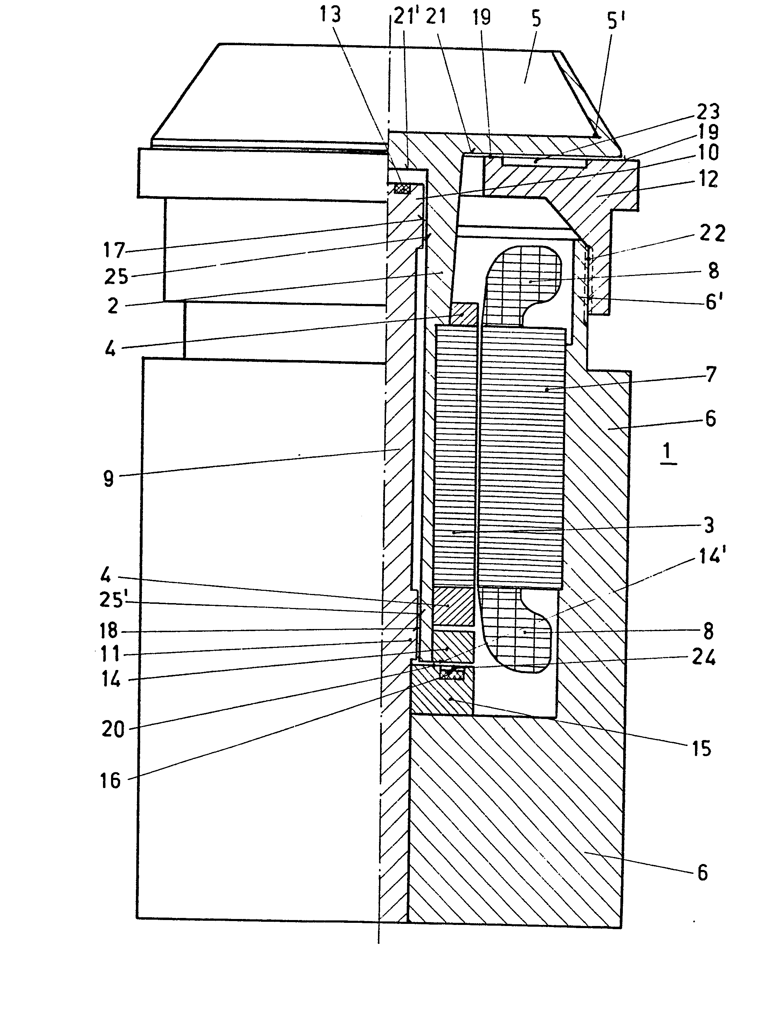

Die Erfindung wird nachstehend anhand in der Zeichnung dargestellten Ausführungsbeispieles näher erläutert:

Die Zeichnung zeigt eine Ansicht eines Offen-End-Spinnmotors, wobei die rechte Hälfte als Axialschnitt dargestellt ist.

Die Spinnvorrichtung besteht grundsätzlich aus einem Elektromotor mit einem Stator 6, 7, 8, 9 und einem Rotor 2, 3, 4 mitsamt Spinntopf 5. In dem Gehäuse 6 sind das Statorblechpaket 7, einschliesslich der Wicklung, von der in der Zeichnung lediglich die Wickelköpfe 8 ersichtlich sind, angeordnet. Im massiven unteren Teil des Gehäuses 6 befindet sich maschinenmittig der Lagerzapfen 9, der mit dem Gehäuse 6 fest verbunden ist. Der Rotor 2, 3, 4 besteht aus einer Hohlwelle 2, die mit einem Spinntopf 5 einstückig oder fest verbunden ist. Im Spinntopf 5 ist die Spinnrille 5' ersichtlich. Auf der Hohlwelle 2 sind ausserdem das Rotorblechpaket 3 und die Rotorwicklung 4 angeordnet. Zur Lagerung der sehr schnell rotierenden Hohlwelle 2 einschliesslich sämtlicher rotierender Teile 3, 4, 5 sind zwei gasdynamische Radialgleitlager 10, 11 und zwei gasdynamische Axialgleitlager 19, 23 und 20, 24 vorgesehen.

Die Forschungsvereinigung Verbrennungskraftmaschinen e.V. hat im Heft R 298, 1976 ein Referat von Prof. J. Glienicke Universität Karlsruhe veröffentlicht, welches anlässlich der Informationstagung der Forschungsvereinigung Verbrennungskraftmaschinen e.V. am 16.9.1976 in München gehalten wurde, und das theoretische und experimentelle Untersuchungen über die in der Erfindung zugrunde gelegten gasdynamischen Lager für kleine Turbomaschinen beschreibt.

Ein erstes Radiallager 10 befindet sich im spinntopfseitigen Abschnitt der Hohlwelle 2 und ein zweites Radiallager
11 am entgegengesetzten Ende der Hohlwelle 2. Ein erstes
Axiallager 19, 23 ist in der Stirnfläche des Lagerschildes
12, das mit dem Gehäuseteil 6' mittels Gewinde 22 oder
fest verbunden ist, ausgebildet und besteht aus der Funktionsfläche 19 und der Axiallagertasche 23. Ein zweites
Axiallager 20, 24 ist in der ringförmigen Erweiterung 15
des Lagerzapfens 9 angeordnet und besteht aus der Funktionsfläche 20 und der Axiallagertasche 24. Da der Rotor
2, 3, 4 mitsamt Spinntopf 5 von der Spinnseite her in die
Statorbohrung auf einfache Weise ein- und ausschiebbar
ist und nicht mechanisch verriegelt wird, kommt der Positionierung des Rotors 2, 3, 4, 5 im Stator 6, 7, 8, 9 eine
erhöhte Bedeutung zu. Die genaue Positionierung des Rotors
2, 3, 4, 5 in jeden Drehzahlbereich erfolgt durch Permanentmagneten 13, 16. Diese befinden sich einmal in dem
der Spinntopfhinterseite 21' gegenüberliegenden Ende des
Lagerzapfens 9 und zum anderen in der ringförmigen Erweiterung 15 des Lagerzapfens 9. Der am Ende des Lagerzapfens
9 angeordnete Permanentmagnet 13 übt einen magnetischen
Zug auf die gegenüberliegende Spinntopfhinterseite 21'
aus und drückt den Rotor 2, 3, 4, 5 mit der Spinntopfhinterseite 21 gegen die Funktionsfläche 19 des ersten Axiallagers 19, 23. Ebenso übt der in der ringförmigen Erweiterung 15 befindliche Permanentmagnet 16 einen magnetischen
Zug auf den gegenüberliegenden Balancierring 14 aus und
drückt den Rotor 2, 3, 4, 5 mit der unteren Fläche 14'
des Balancierringes 14 gegen die Funktionsfläche 20 des
zweiten Axiallagers 20, 24. Auf diese Weise ist der Rotor
2, 3, 4 mitsamt Spinntopf 5 in jedem Drehzahlbereich in
genau definierter Positionierung im Stator 6, 7, 8, 9 gehalten.

Der Balancierring 14, der sich am spinntopfseitigen abgewandten Ende der Hohlwelle 2 befindet, dient neben der
Funktion der axialen Lagerung des Rotors 2, 3, 4, 5 weiterhin zum Ausgleich von eventuell auftretender geringfügiger Unwucht des Rotors 2, 3, 4, 5 bei sehr hohen Drehzahlen. Bei Maschinenstillstand haben die Funktionsflächen 19, 21 des ersten - 19, 23 und die Funktionsflächen 14', 20 des zweiten Axiallagers 20, 24 Berührungskontakt. Ebenso können sich bei Maschinenstillstand die Funktionsflächen 17, 18 des ersten 10- und zweiten Radiallagers 11 mit den gegenüberliegenden Funktionsflächen 25, 25' des Lagerzapfens 9 berühren. Jedoch findet bei bereits geringer Drehzahl des Rotors 2, 3, 4, 5, sowohl in den beiden Axiallagern 19, 23; 20, 24 als auch in den beiden Radiallagern 10, 11 ein Druckaufbau statt und es bildet sich selbsttätig ein konvergierender Spalt einmal zwischen den Funktionsflächen 19, 21 des ersten Axiallagers 19, 23 und den Funktionsflächen 14', 20 des zweiten Axiallagers 20, 24 und zum anderen zwischen den Funktionsflächen 17, 25 des ersten Radiallagers 10 und den Funktionsflächen 18, 25' des zweiten Radiallagers 11 aus.

Selbstverständlich beschränkt sich die Lagerung der Hohlwelle 2 mitsamt der rotierenden Teile 3, 4, 5 nicht nur auf gasdynamische Radial- 10, 11 und Axialgleitlager 19, 23; 20, 24. Darüber hinaus können im Rahmen der vorliegenden Erfindung ebenfalls gasstatische, hydrodynamische und hydrostatische Gleitlager sowie Wälzlager in den verschiedensten Arten zur Anwendung gelangen. Die Wahl der Lagerung hängt in erster Linie von der Rotordrehzahl ab.

P a t e n t a n s p r ü c h e

1. Offen-End-Spinnvorrichtung, im wesentlichen bestehend aus einem Elektromotor (1) mit Gehäuse (6) und Statorblechpaket (7), einem Rotor (2, 3, 4, 5), dessen Blechpaket (3) und Wicklung (4) auf einer Hohlwelle (2) angeordnet sind und einem auf der Hohlwelle (2) angeordnetem Spinntopf (5), dadurch gekennzeichnet, dass im Inneren der Hohlwelle (2) ein Lagerzapfen (9) angeordnet ist, der den Rotor (2, 3, 4, 5) mitsamt Wicklung (4) und Spinntopf (5) zumindest in radialer Richtung führt, welcher Lagerzapfen (9) mit dem Gehäuse (6) des Motors (1) fest verbunden ist.

2. Vorrichtung nach Anspruch 1, dadurch gekennzeichnet, dass die Hohlwelle (2) und der Spinntopf (5) einstückig ausgebildet oder fest miteinander verbunden sind.

3. Vorrichtung nach Anspruch 1 oder 2, dadurch gekennzeichnet, dass der Rotor (2, 3, 4, 5) mit Spinntopf (5) in die Statorbohrung von der Spinnseite her ein- und ausschiebbar ist.

4. Vorrichtung nach Anspruch 1, 2 oder 3, dadurch gekennzeichnet, dass der Lagerzapfen (9) bis an das spinntopfseitige Ende der Hohlwelle (2) heranreicht.

5. Vorrichtung nach einem der Ansprüche 1 bis 4, dadurch gekennzeichnet, dass am spinntopfseitigen Abschnitt der Hohlwelle (2) ein erstes gasdynamisches Radiallager (10) und am entgegengesetzten Ende der Hohlwelle (2) ein zweites gasdynamisches Radiallager (11) vorgesehen ist.

6. Vorrichtung nach einem der Ansprüche 1 bis 5, dadurch gekennzeichnet, dass das Gehäuse (6) mit einer Frontabdeckung versehen ist, die als Lagerschild (12) für ein gasdynamisches Axiallager (19, 23) ausgebildet ist.

7. Vorrichtung nach einem der Ansprüche 1 bis 6, dadurch gekennzeichnet, dass der Lagerzapfen (9) mit wenigstens einer ringförmigen Erweiterung (15) versehen ist, die zur Aufnahme für ein weiteres gasdynamisches Axiallager (20, 24) dient.

8. Vorrichtung nach einem der Ansprüche 1 bis 7, dadurch gekennzeichnet, dass im Statorteil (6, 7, 8, 9) Mittel (13, 16) zur Erzeugung einer Rückstellkraft für den Rotor (2, 3, 4, 5) vorgesehen sind.

9. Vorrichtung nach Anspruch 8, dadurch gekennzeichnet, dass die Mittel Permanentmagnete (13, 16) sind, welche vorzugsweise eine ringförmige Ausbildung aufweisen.

10. Vorrichtung nach einem der Ansprüche 8 und 9, dadurch gekennzeichnet, dass in dem der Spinntopfhinterseite (21') gegenüberliegenden Ende des Lagerzapfens (9) wenigstens ein Permanentmagnet (13) vorgesehen ist.

11. Vorrichtung nach einem der Ansprüche 7, 8 und 9, dadurch gekennzeichnet, dass in der ringförmigen Erweiterung (15) des Lagerzapfens (9) wenigstens ein Permanentmagnet (16) vorgesehen ist.

12. Vorrichtung nach einem der Ansprüche 1 bis 11, dadurch gekennzeichnet, dass in den Spalten zwischen den radialen (17, 18) und axialen (19, 20) Funktionsflächen der Lager (10; 11; 19, 23; 20, 24) und den Funktionsflächen (25) des Lagerzapfens (9) sowie der Spinntopfhinterseite 21' ein Luftüberdruck erzeugt wird und
der Rotor (2, 3, 4, 5) gasdynamisch kontaktlos im Stator (6, 7, 8, 9) geführt ist.

13. Vorrichtung nach wenigstens einem der Ansprüche 6,
10 und 12, dadurch gekennzeichnet, dass die gegenüberliegenden Flächen (19, 21) von Spinntopfhinterseite
(21) und Stirnfläche (19) des Lagerschildes (12) ähnliche Konturen zur Abdichtung des Rotors (2, 3, 4,
5) aufweisen.

14. Vorrichtung nach wenigstens einem der Ansprüche 6,
10, 12 und 13, dadurch gekennzeichnet, dass das Lagerschild (12) bis an die Hohlwelle (2) heranreicht, wobei die verbleibende Bohrung des Lagerschildes (12)
einen dem Aussendurchmesser des Rotors (2, 3, 4, 5)
entsprechenden Durchmesser aufweist.

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | FR-A- 740 330 (A. HUBERTY) <br> * Insgesamt * | 1 | D 01 H 1/244 |
| A | DE-A-2 355 769 (TELDIX) <br><br> * Insgesamt * | 2,3,4, 5,9,11 | |
| A | DE-A-2 653 927 (TELDIX) | | |
| A | FR-A-2 277 915 (MASCHINENFABRIK AUGSBURG-NÜRNBERG) | | |

|  |
|---|
| RECHERCHIERTE SACHGEBIETE (Int. Cl. ³) |
| D 01 H |

Der vorliegende Recherchenbericht wurde für alle Patentansprüche erstellt

| Recherchenort <br> DEN HAAG | Abschlußdatum der Recherche <br> 24-03-1983 | Prüfer <br> DEPRUN M. |
|---|---|---|